# EUROPEAN PATENT SPECIFICATION

(11) **EP 4 386 958 B1**
(45) Date of publication and mention of the grant of the patent: **04.02.2026**
(21) Application number: 22925096.4
(22) Date of filing: 24.11.2022
(51) Int. Cl.: H01M 50/30, H01M 50/35, H01M 50/20, H01M 50/249, H01M 10/052

(54) **BATTERY MODULE, AND BATTERY PACK AND VEHICLE INCLUDING THE SAME**
BATTERIEMODUL SOWIE BATTERIEPACK UND FAHRZEUG DAMIT
MODULE DE BATTERIE, ET BLOC-BATTERIE ET VÉHICULE COMPRENANT CELUI-CI

(30) Priority: 07.02.2022 KR 20220015832
(43) Date of publication of application: 19.06.2024
(73) Proprietor: LG Energy Solution, Ltd., Seoul 07335 (KR)
(72) Inventor: RYU, Sang-Woo, Daejeon 34122 (KR); KANG, Dal-Mo, Daejeon 34122 (KR); CHOI, Jee-Soon, Daejeon 34122 (KR)
(74) Representative: Plasseraud IP
(86) International application number: PCT/KR2022/018759
(87) International publication number: WO 2023/149629

(56) References cited:
- WO-A1-2021/210744
- KR-A- 20140 021 961
- KR-A- 20210 129 513
- KR-A- 20210 129 513
- KR-A- 20210 137 910
- KR-B1- 101 998 224
- US-A1- 2016 254 578
- US-A1- 2018 108 892
- US-A1- 2018 241 017
- US-A1- 2023 045 395

## Description

### TECHNICAL FIELD

The present application claims priority to Korean Patent Application No. 10-2022-0015832 filed on February 7, 2022 in the Republic of Korea.

The present disclosure relates to a battery module, and a battery pack and a vehicle including the same, and more particularly, to a battery module in which gas is discharged but a flame is not discharged when a battery cell catches fire, and a battery pack and a vehicle including the battery module.

### BACKGROUND ART

As the development and demand for mobile devices has increased, the demand for secondary batteries as energy sources has rapidly increased. Nickel cadmium batteries or hydrogen ion batteries have been used as conventional secondary batteries, but recently, lithium secondary batteries having little memory effect compared to nickel-based secondary batteries, free charging and discharging, a very low self-discharge rate, and high energy density have been widely used.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate coated with a positive electrode active material and a negative electrode active material are located with a separator therebetween, and a casing in which the electrode assembly is air-tightly accommodated with an electrolyte, that is, a battery case.

A lithium secondary battery includes a positive electrode, a negative electrode, a separator located between the positive electrode and the negative electrode, and an electrolyte, and is divided into a lithium-ion battery (LIB), a polymer lithium-ion battery (PLIB), and so on according to which one is used between a positive electrode active material and a negative electrode active material. In general, an electrode of a lithium secondary battery may be formed by applying a positive electrode or negative electrode active material to a current collector such as an aluminum or copper sheet, mesh, film, or foil and then drying the same.

Lithium secondary batteries have been spotlighted due to the advantages of a high operating voltage and extremely high energy density. However, because lithium secondary batteries use an organic electrolyte, when the lithium secondary batteries are overcharged, overcurrent and overheating are caused, and thus, a fire may be caused due to explosion or ignition in severe cases.

Various types of secondary batteries include a case for protecting a battery cell, a battery module in which a plurality of battery cells are stacked and inserted into the case, and a battery pack in which a plurality of battery modules are included.

When a flame is generated in at least one of battery cells in a case of a battery module and leaks out of the case of the battery module, the flame may propagate to other battery modules and a user may be in a dangerous situation. For example, when a flame is generated in a battery cell and leaks out in a state where a battery module or a battery pack is installed in an electric vehicle, a driver driving the electric vehicle may be burned or be in a dangerous situation.

Document KR 2021 0129513 discloses a battery module having a flame discharge prevention structure.

### DISCLOSURE

### Technical Problem

The present disclosure is designed to solve the problems of the related art, and therefore the present disclosure is directed to providing a battery module in which, when a flame is generated in a battery cell, gas is discharged to the outside of a case but the flame is prevented from leaking out, and a battery pack and a vehicle including the battery module.

### Technical Solution

In one aspect of the present disclosure, there is provided a battery module including a battery cell stack in which a plurality of battery cells are stacked, a case in which the battery cell stack is accommodated, the case including a first outlet through which gas is discharged, an exhaust path member mounted on the case to provide a gas discharge path through which gas is discharged but a flame is prevented from leaking out, and a cover coupled to the case to cover the exhaust path member, the cover including a second outlet through which gas moving through the exhaust path member is discharged, wherein a covering portion included in the case is provided to adjust a length.

Also, the first outlet formed in the case and the second outlet formed in the cover is formed in opposite directions, wherein the gas is discharged from the first outlet to the second outlet while being guided by the exhaust path member.

Also, the case includes a lower cover in which the battery cell stack is accommodated, and an upper cover coupled to the lower cover, allowing the exhaust path member to be mounted thereon, including the first outlet, and provided so that a length is adjustable, wherein the cover is coupled to the upper cover, and the exhaust path member is located between the cover and the upper cover.

Also, the upper cover includes a first plate on which a first rail having an uneven shape is formed, and a second plate on which a second rail having an uneven shape is formed to correspond to the first rail of the first plate, the second plate being coupled to the first plate.

Also, the first plate and the second plate move along the first rail and the second rail to adjust a length.

Also, an insertion groove into which the exhaust path member is inserted may be formed at an end of the upper cover.

Also, any one exhaust path member and another adjacent exhaust path member from among a plurality of exhaust path members may be arranged in a zigzag shape.

Also, the exhaust path member may include an inner partition including a coupling groove, at least one height adjustment partition inserted into the coupling groove of the inner partition, and an outer partition covering the inner partition.

Also, the coupling groove may be formed in at least one of an upper portion and a lower portion of the inner partition, and a protrusion corresponding to a shape of the coupling groove may be formed on the height adjustment partition, wherein the protrusion of the height adjustment partition is inserted into the coupling groove of the inner partition.

Also, the battery module may further include a fixing pin configured to fix the height adjustment partition, wherein a through-hole is formed in a side surface of the inner partition, and a plurality of fixing grooves are formed in the height adjustment partition, wherein the fixing pin passes through the through-hole of the inner partition and is inserted into one of the plurality of fixing grooves of the height adjustment partition to fix the height adjustment partition.

Also, the outer partition may be coupled to the inner partition in a sliding manner.

Also, a guide groove may be formed at an edge of the inner partition, and a projection may be formed at an edge of the outer partition, wherein the projection of the outer partition moves along the guide groove of the inner partition.

According to another aspect of the present disclosure, there are provided a battery pack including the battery module and a vehicle including the battery module.

### Advantageous Effects

According to embodiments of the present disclosure, when a flame is generated in a battery cell, gas may be discharged to the outside by an exhaust path member mounted on a case but the flame may be prevented from leaking out.

### DESCRIPTION OF DRAWINGS

FIG. 1 is a combined perspective view illustrating a battery module, according to an embodiment of the present disclosure.
FIG. 2 is an exploded perspective view illustrating a battery module, according to an embodiment of the present disclosure.
FIG. 3 is a perspective view illustrating a state where a cover is removed from a battery module, according to an embodiment of the present disclosure.
FIGS. 4 to 6 are views illustrating a state where a case separated from a battery module is coupled to adjust a length, according to an embodiment of the present disclosure.
FIGS. 7 to 11 are views illustrating a process of assembling an exhaust path member in a battery module, according to an embodiment of the present disclosure.
FIG. 12 is a view illustrating a state where a height of an exhaust path member is adjusted in a battery module, according to an embodiment of the present disclosure.
FIG. 13 is a view illustrating a state where a length of an exhaust path member is adjusted in a battery module, according to an embodiment of the present disclosure.
FIG. 14 is another embodiment of FIG. 3, illustrating a case where a length of a case is increased.
FIG. 15 is still another embodiment of FIG. 3, illustrating a case where a length of a case is reduced.
FIG. 16 is still another embodiment of FIG. 3, illustrating a case where the number of exhaust path members is reduced.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

The size of each element or a specific portion of the element shown in the drawings may be exaggerated, omitted or schematically drawn for the purpose of convenience and clarity of explanation. Accordingly, the size of each element may not substantially reflect its actual size. While describing the present disclosure, detailed descriptions of related well-known functions or configurations that may blur the points of the present disclosure are omitted.

Also, in the present specification, it will be understood that when elements are "coupled" or "connected" to each other, the elements may be directly coupled or connected to each other, or may be indirectly coupled or connected to each other with an intervening element therebetween.

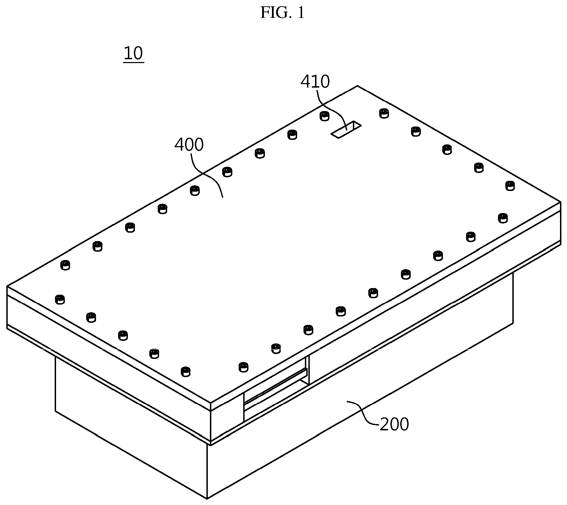

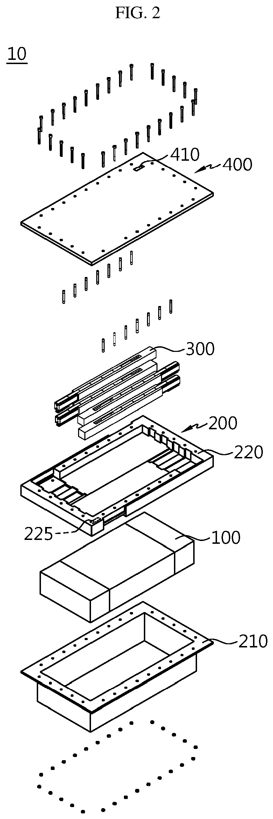

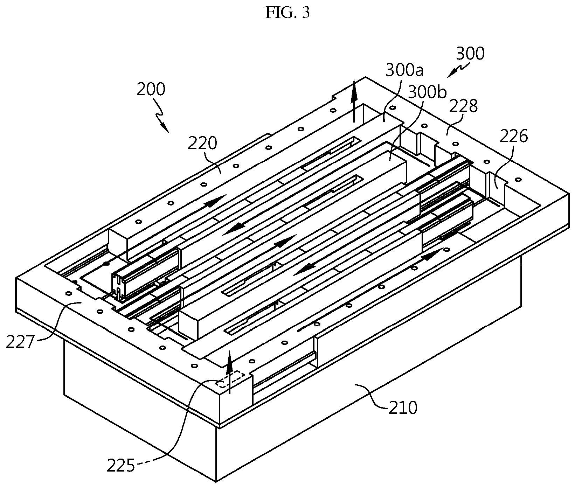

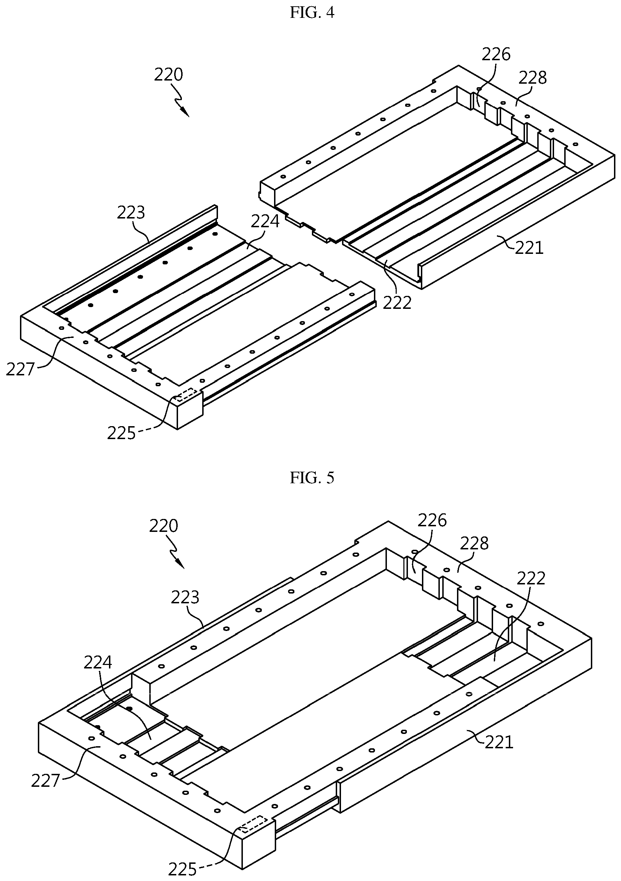

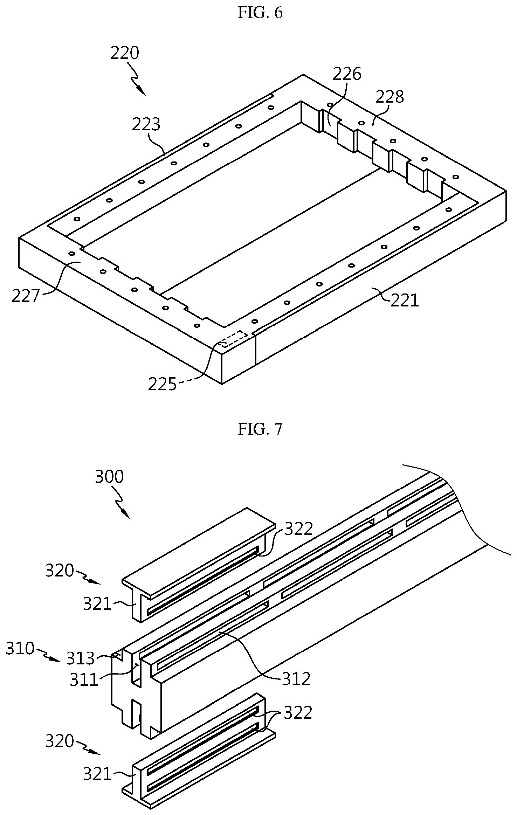

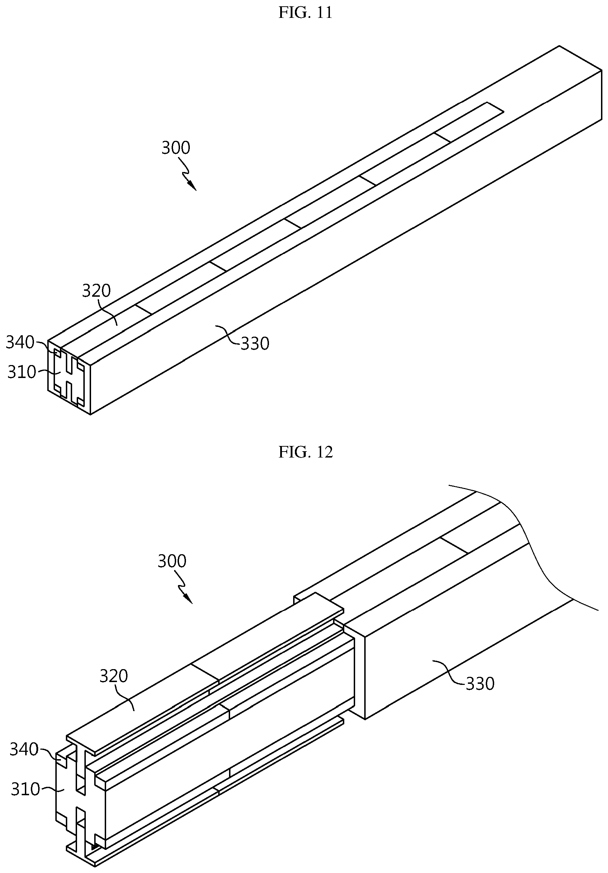

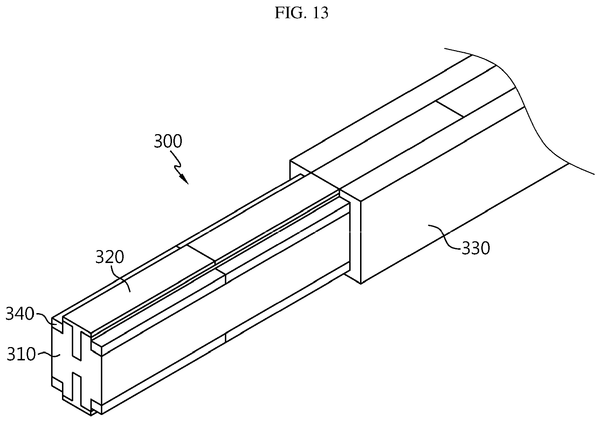

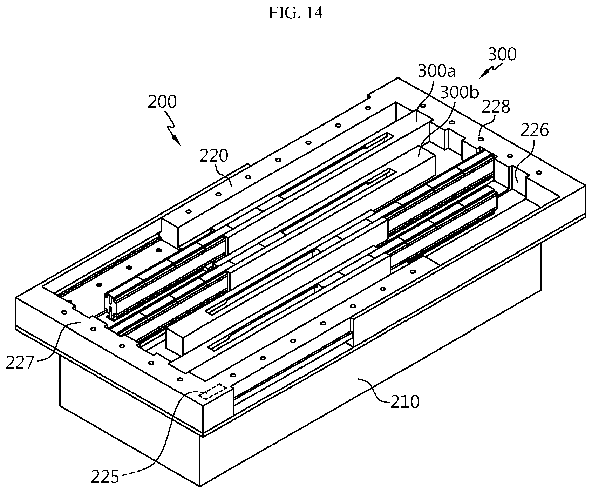

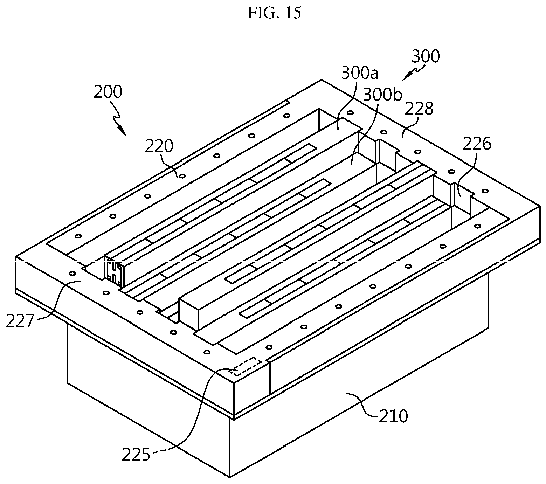

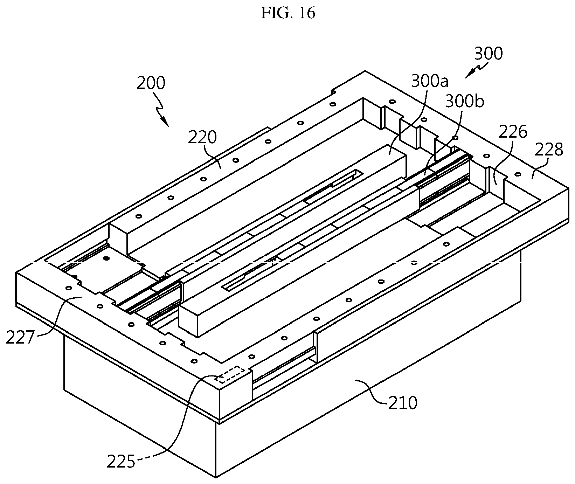

FIG. 1 is a combined perspective view illustrating a battery module, according to an embodiment of the present disclosure. FIG. 2 is an exploded perspective view illustrating a battery module, according to an embodiment of the present disclosure. FIG. 3 is a perspective view illustrating a state where a cover is removed from a battery module, according to an embodiment of the present disclosure. FIGS. 4 to 6 are views illustrating a state where a case separated from a battery module is coupled to adjust a length, according to an embodiment of the present disclosure. FIGS. 7 to 11 are views illustrating a process of assembling an exhaust path member in a battery module, according to an embodiment of the present disclosure. FIG. 12 is a view illustrating a state where a height of an exhaust path member is adjusted in a battery module, according to an embodiment of the present disclosure. FIG. 13 is a view illustrating a state where a length of an exhaust path member is adjusted in a battery module, according to an embodiment of the present disclosure. FIG. 14 is another embodiment of FIG. 3, illustrating a case where a length of a case is increased. FIG. 15 is still another embodiment of FIG. 3, illustrating a case where a length of a case is reduced. FIG. 16 is still another embodiment of FIG. 3, illustrating a case where the number of exhaust path members is reduced.

Referring to the drawings, a battery module 10 according to an embodiment of the present disclosure includes a battery cell stack 100, a case 200, an exhaust path member 300, and a cover 400.

The battery cell stack 100 is formed by stacking a plurality of battery cells including electrode leads. The battery cell may have any of various structures, and also, the plurality of battery cells may be stacked in any of various ways. The electrode lead provided in the battery cell may be a terminal exposed to the outside and connected to an external device, and may be formed of a conductive material.

The electrode lead may include a positive electrode lead and a negative electrode lead. The positive electrode lead and the negative electrode lead may be located in opposite directions in a longitudinal direction of the battery cell, or the positive electrode lead and the negative electrode lead may be located in the same direction in the longitudinal direction of the battery cell.

The positive electrode lead and the negative electrode lead may be formed of various materials. For example, the positive electrode lead may be formed of an aluminum material and the negative electrode lead may be formed of a copper material.

The electrode lead may be electrically coupled to a bus bar (not shown). The battery cell may have a structure in which a plurality of unit cells arranged in an order of positive electrode plate-separator-negative electrode plate or bi-cells arranged in an order of positive electrode plate-separator-negative electrode plate-separator-positive electrode plate-separator-negative electrode plate are stacked according to battery capacity.

The battery cell stack 100 may include a plurality of cartridges (not shown) in which the battery cells are respectively accommodated. Each of the cartridges (not shown) may be manufactured by using plastic injection molding, and the plurality of cartridges (not shown) having a receiving portion in which the battery cell may be accommodated may be stacked.

A cartridge assembly in which the plurality of cartridges (not shown) are stacked may include a connector element or a terminal element. The connector element may include, for example, any of various types of electrical connection components or connection members to be connected to a battery management system (BMS) for providing data about a voltage or a temperature of the battery cell.

Also, the terminal element may include a positive electrode terminal and a negative electrode terminal as a main terminal connected to the battery cell, and the terminal element may include a terminal bolt and may be electrically connected to the outside. The battery cell may have any of various shapes.

Referring to FIGS. 1 and 2, the battery cell stack 100 is accommodated in the case 200, and a first outlet 225 through which gas is discharged is formed in the case 200. For example, the case 200 may surround the battery cell stack 100. The case 200 surrounds the entire battery cell stack 100, and protects the battery cell stack 100 from external vibration or impact.

A covering portion included in the case 200 is provided to adjust a length in any of various methods. Length adjustment of the case 200 will be described below in detail.

The case 200 may be formed in a shape corresponding to a shape of the battery cell stack 100. For example, when the battery cell stack 100 has a hexahedral shape, the case 200 may also have a corresponding hexahedral shape.

The case 200 may be manufactured by bending a plate formed of a steel material, and may be manufactured as an integrated type, or may be manufactured as a separated type. Although the case 200 may be made of a steel material that may withstand a flame, a material of the case 200 is not limited to steel and may include any of various metals.

The case 200 may include a mica plate formed of mica having heat insulation and heat resistance to prevent leakage of a flame. The mica plate may have a flat shape or a shape in which a flat surface and a curved surface are mixed.

Referring to FIGS. 1 and 2, the case 200 may include a lower cover 210 and an upper cover 220. The battery cell stack 100 is accommodated in the lower cover 210.

The upper cover 220 is coupled to the lower cover 210, and referring to FIG. 3, the exhaust path member 300 is mounted on the upper cover 220. The first outlet 225 is formed in the upper cover 220. The exhaust path member 300 may be inserted into an insertion groove 226 of the upper cover 220. Gas generated in the battery cell stack 100 in the case 200 moves toward the exhaust path member 300 through the first outlet 225 of the upper cover 220.

The upper cover 220 may be provided so that a length is adjustable. For example, referring to FIGS. 4 to 6, the upper cover 220 may include a first plate 221 and a second plate 223. A first rail 222 having an uneven shape is formed on the first plate 221, and a second rail 224 having an uneven shape is formed on the second plate 223 to correspond to the first rail 222 of the first plate 221.

As shown in FIGS. 5 and 6, the first plate 221 and the second plate 223 may be coupled through the first rail 222 and the second rail 224. The first plate 221 and the second plate 223 are provided to move along the first rail 222 and the second rail 224. As such, as the first plate 221 and the second plate 223 move, a length of the upper cover 220 may be adjusted.

However, this is merely an example, and more diverse length adjustment methods of the upper cover 220 may be applied. As such, when a length of the upper cover 220 is adjusted, the upper cover 220 may be applied to battery cells having various lengths.

The insertion groove 226 may be formed at an end of the upper cover 220, and the exhaust path member 300 is inserted into and fixed to the insertion groove 226. However, various methods of coupling the exhaust path member 300 to the upper cover 220 may be applied.

A through-portion (not shown) through which the connector element or the terminal element may be exposed to the outside may be formed in the case 200. That is, the connector element or the terminal element may be electrically connected to a certain external component or member, and the through-portion may be formed in the case 200 so that the electrical connection is not disturbed by the case 200.

The exhaust path member 300 is mounted on the case 200 to provide a gas discharge path, to discharge gas but prevent leakage of a flame.

Referring to FIG. 3, a plurality of exhaust path members 300 may be provided, and any one exhaust path member 300a and another adjacent exhaust path member 300b from among the plurality of exhaust path members 300 may be arranged in a zigzag shape.

That is, when any one exhaust path member 300a is spaced apart from a first circumferential portion 227 of the case 200, another adjacent exhaust path member 300b may be spaced apart from a second circumferential portion 228 of the case 200.

Gas may move from the first outlet 225 in an arrow direction of FIG. 3 and discharged through the second outlet 410, but a flame may be blocked by the exhaust path member 300 and thus may not move.

Referring to FIGS. 7 to 10, the exhaust path member 300 may include an inner partition 310, a height adjustment partition 320, and an outer partition 330.

The inner partition 310 may be located inside the outer partition 330, and a coupling groove 311 may be formed in the inner partition 310. Th height adjustment partition 320 is inserted into the coupling groove 311 of the inner partition 310. The coupling groove 311 may be formed at any of various positions of the inner partition 310. For example, the coupling groove 311 may be formed in an upper portion or a lower portion as shown in FIG. 7.

Although the coupling groove 311 is formed in both the upper portion and the lower portion of the inner partition 310 in FIG. 7, the coupling groove 311 may be formed only in one of the upper portion and the lower portion of the inner partition 310.

One or more height adjustment partitions 320 may be provided and inserted into the coupling grooves 311 of the inner partition 310. Referring to FIG. 7, a protrusion 321 corresponding to a shape of the coupling groove 311 may be formed on the height adjustment partition 320, and the protrusion 321 of the height adjustment partition 320 may be inserted into the coupling groove 311 of the inner partition 310.

The height adjustment partition 320 may move in an up-down direction along the coupling groove 311 of the inner partition 310 to adjust an overall height of the exhaust path member 300, which will be described below in detail.

The height adjustment partition 320 may be fixed by a fixing pin 340. To this end, as shown in FIG. 7, a through-hole 312 may be formed in a side surface of the inner partition 310, and a plurality of fixing grooves 322 may be formed in the height adjustment partition 320.

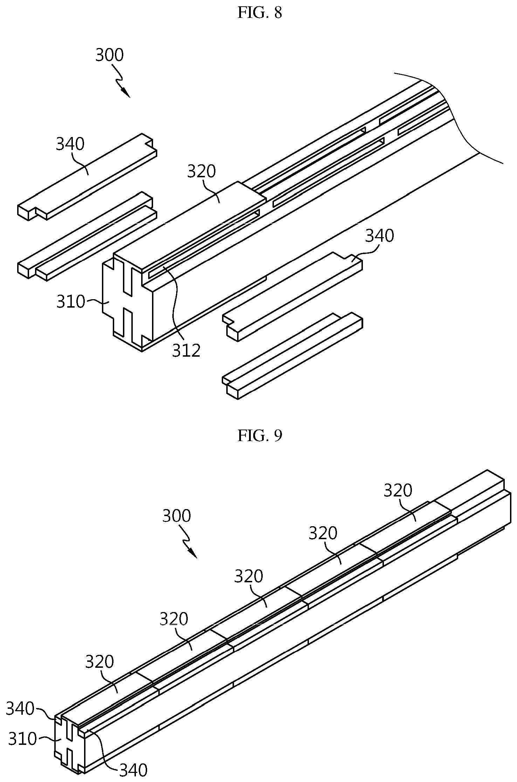

As shown in FIG. 8, the fixing pin 340 may be inserted into the through-hole 312 of the inner partition 310 and the fixing groove 322 of the height adjustment partition 320, to fix the height adjustment partition 320 as shown in FIG. 9. In FIG. 9, a plurality of height adjustment partitions 320 are coupled to an upper portion of the inner partition 310 in the longitudinal direction in FIG. 8 and each of the height adjustment partitions 320 is fixed by the fixing pint 340.

As shown in FIG. 12, the height adjustment partition 320 may move upward from FIG. 8 and the height adjustment partition 320 may be fixed by the fixing pin 340, to adjust a height of the exhaust path member 300.

That is, the fixing pin 340 may pass through the through-hole 312 of the inner partition 310 and be inserted into one of the plurality of fixing grooves 322 of the height adjustment partition 320 to fix the height adjustment partition 320, and a height of the exhaust path member 300 may be determined according to a position of the height adjustment partition 320 in the up-down direction.

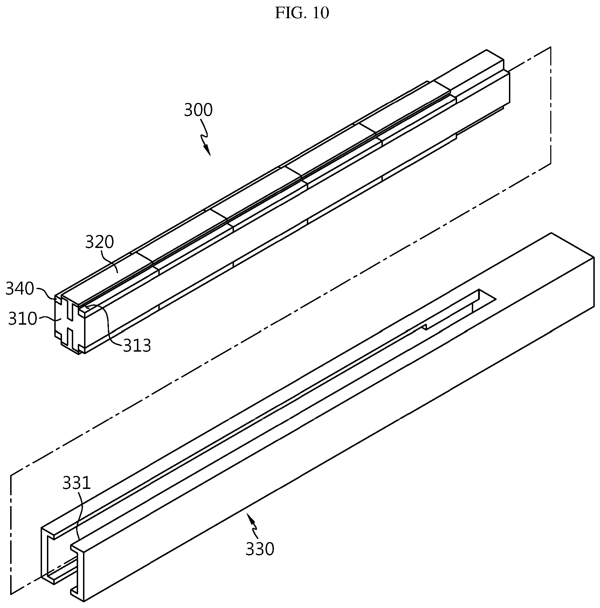

Referring to FIG. 11, the outer partition 330 covers the inner partition 310. The outer partition 330 may cover the inner partition 310 in any of various ways. For example, as shown in FIG. 10, the outer partition 330 may be coupled to the inner partition 310 in a sliding manner.

That is, in one embodiment, a guide groove 313 may be formed at an edge of the inner partition 310, a projection 331 may be formed at an edge of the outer partition 330, and the projection 331 of the outer partition 330 may move along the guide groove 313 of the inner partition 310.

For example, as shown in FIG. 13. the outer partition 330 may move from the inner partition 310 so that an overall length of the exhaust path member 300 is increased.

Referring to FIGS. 2 and 3, the cover 400 is coupled to the case 200 to cover the exhaust path member 300, and a second outlet 410 is formed in the cover 400 so that gas moving through the exhaust path member 300 is discharged. The cover 400 is coupled to the upper cover 220, and the exhaust path member 300 is located between the cover 400 and the upper cover 220.

That is, gas generated in the case 200 moves to the exhaust path member 300 through the first outlet 225 of the upper cover 220, and is discharged from the exhaust path member 300 to the outside through the second outlet 410 of the cover 400.

The first outlet 225 formed in the case 200 and the second outlet 410 formed in the cover 400 are formed in opposite directions. Because a flame basically moves upward, according to the above structure, even when a flame moves upward through the first outlet 225, the flame may be blocked by the exhaust path member 300, and thus, may not move to the second outlet 410 formed in a direction opposite to the first outlet 225.

Accordingly, gas may be discharged from the first outlet 225 to the second outlet 410 while being guided through the second outlet 410, but a flame may not be discharged through the second outlet 410.

An operation and effect of the battery module 10 according to an embodiment of the present disclosure will be described with reference to the drawings.

Referring to FIGS. 1 and 2, the battery cell stack 100 is accommodated in the case 200. Referring to FIG. 3, the first outlet 225 is formed in the upper cover 220 of the case 200, and the exhaust path member 300 is mounted on the upper cover 220.

Referring to FIGS. 2 and 3, the second outlet 410 of the cover 400 is formed in the opposite direction to and far from the first outlet 225 of the upper cover 220.

A length of the case 200 may be adjusted as the first plate 221 on which the first rail 222 having an uneven shape is formed and the second plate 223 on which the second rail 224 having an uneven shape is formed are coupled and move.

The exhaust path member 300 may include the inner partition 310, the height adjustment partition 320, the outer partition 330, and the fixing pin 340, and a height of the exhaust path member 300 may be adjusted by the height adjustment partition 320 and a length of the exhaust path member 300 may be adjusted as the outer partition 330 is slidable along the inner partition 310.

When a height of the case 200 is adjusted, a height and a length of the exhaust path member 300 are adjusted, and then the exhaust path member 300 is mounted on the case 200, a flame may be blocked by the exhaust path member 300 and thus may not move, but gas may be discharged through a path as shown in FIG. 3.

The case 200 may include a mica plate or a plate formed of a metal material. Also, because the first outlet 225 and the second outlet 410 are located in opposite directions, a flame generated in a battery cell in the case 200 is not discharged.

Accordingly, when a flame is generated in a battery cell, gas may be discharged to the outside of the case 200 but leakage of the flame may be prevented.

Referring to FIGS. 14 to 16, the exhaust path member 300 may be provided in various ways. Referring to FIG. 14, when the number of battery cells or battery cell stacks 100 is greater or a length of the battery cell or the battery cell stack 100 is greater than that in FIG. 3, a length of the case 20 may be adjusted to be increased and a length of the exhaust path member 300 may also be adjusted to be increased to correspond to the size of the case 200.

Referring to FIG. 15, when the number of battery cells or battery cell stacks 100 is less or a length of the battery cell or the battery cell stack 100 is less than that in FIG. 3, a length of the case 200 may be adjusted to be reduced and a length of the exhaust path member 300 may also be adjusted to be reduced to correspond to the size of the case 200.

Referring to FIG. 16, when the explosive force of a battery cell is less than that of FIG. 3, a structure having a low rigidity may be used, and thus, the number of exhaust path members 300 may be reduced and cost may be reduced.

However, each of FIGS. 14 to 16 is a modified embodiment, and the battery module 10 according to an embodiment of the present disclosure may be modified in more various ways.

A battery pack (not shown) according to an embodiment of the present disclosure may include one or more battery modules 10 according to an embodiment of the present disclosure as described above. Also, in addition to the battery module 10, the battery pack (not shown) may further include a housing for receiving the battery module 10, and various devices for controlling charging and discharging of the battery module 10, for example, a BMS, a current sensor, and a fuse.

A vehicle (not shown) according to an embodiment of the present disclosure may include the battery module 10 or a battery pack (not shown), and the battery module 10 may be included in the battery pack (not shown). The battery module 10 according to an embodiment of the present disclosure may be applied to the vehicle (not shown), for example, a certain vehicle (not shown) provided to use electricity such as an electric vehicle or a hybrid vehicle.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

### INDUSTRIAL APPLICABILITY

The present disclosure relates to a battery module, and a battery pack and a vehicle including the same, and particularly, may be used in industries related to secondary batteries.

## Claims

1. A battery module (10) comprising:
a battery cell stack (100) in which a plurality of battery cells are stacked;
a case (200) in which the battery cell stack (100) is accommodated, the case comprising a first outlet (225) through which gas is discharged;
an exhaust path member (300) mounted on the case to provide a gas discharge path through which gas is discharged but a flame is prevented from leaking out; and
a cover (400) coupled to the case (200) to cover the exhaust path member, the cover comprising a second outlet (410) through which gas moving through the exhaust path member is discharged,
wherein the first outlet (225) formed in the case (200) and the second outlet (410) formed in the cover (400) are formed in opposite directions,
wherein the gas is discharged from the first outlet (225) to the second outlet (410) while being guided by the exhaust path member (300),
**characterized in that** the case (200) comprises:
- a lower cover (210) in which the battery cell stack (100) is accommodated; and
- an upper cover (220) coupled to the lower cover (210), allowing the exhaust path member (300) to be mounted thereon, comprising the first outlet (225), and provided so that a length is adjustable,
**in that** the cover (400) is coupled to the upper cover (220), and the exhaust path member (300) is located between the cover (400) and the upper cover (220),
**in that** the upper cover (220) comprises:
- a first plate (221) on which a first rail (222) having an uneven shape is formed; and
- a second plate (223) on which a second rail 224) having an uneven shape is formed to correspond to the first rail (222) of the first plate (221), the second plate (223) being coupled to the first plate (221), and
**in that** the first plate (221) and the second plate (223) move along the first rail (222) and the second rail (224) to adjust a length.

2. The battery module according to claim 1, wherein an insertion groove (226) into which the exhaust path member (300) is inserted is formed at an end of the upper cover (220).

3. The battery module according to claim 1, wherein any one exhaust path member (300) and another adjacent exhaust path member (300) from among a plurality of exhaust path members (300) are arranged in a zigzag shape.

4. The battery module according to claim 1, wherein the exhaust path member (300) comprises:
an inner partition (310) comprising a coupling groove (311);
at least one height adjustment partition (320) inserted into the coupling groove (311) of the inner partition (310); and
an outer partition (330) covering the inner partition (310).

5. The battery module according to claim 4, wherein the coupling groove (311) is formed in at least one of an upper portion and a lower portion of the inner partition (310), and a protrusion (321) corresponding to a shape of the coupling groove (311) is formed on the height adjustment partition (320),
wherein the protrusion (321) of the height adjustment partition (320) is inserted into the coupling groove (311) of the inner partition (310).

6. The battery module according to claim 5, further comprising a fixing pin (340) configured to fix the height adjustment partition (320),
wherein a through-hole (312) is formed in a side surface of the inner partition (310), and
a plurality of fixing grooves (322) are formed in the height adjustment partition (320),
wherein the fixing pin (314) passes through the through-hole (312) of the inner partition (310) and is inserted into one of the plurality of fixing grooves (322) of the height adjustment partition to fix the height adjustment partition (320).

7. The battery module according to claim 4, wherein the outer partition (330) is coupled to the inner partition (310) in a sliding manner.

8. The battery module according to claim 7, wherein a guide groove (313) is formed at an edge of the inner partition (310), and a projection is formed at an edge of the outer partition (330),
wherein the projection of the outer partition (330) moves along the guide groove (313) of the inner partition (310).

9. A battery pack comprising the battery module (10) according to any one of claims 1 to 8.

10. A vehicle comprising the battery module (10) according to any one of claims 1 to 8.

## Patentansprüche

1. Batteriemodul (10), umfassend:
einen Batteriezellen-Stapel (100), in welchem eine Mehrzahl von Batteriezellen gestapelt sind;
ein Gehäuse (200), in welchem der Batteriezellen-Stapel (100) aufgenommen ist, wobei das Gehäuse einen ersten Auslass (225) umfasst, durch welchen Gas abgegeben wird;
ein Abgaspfad-Element (300), welches an dem Gehäuse montiert ist, um einen Gasabgabe-Pfad bereitzustellen, durch welchen Gas abgegeben wird, jedoch verhindert wird, dass eine Flamme austritt; und
eine Abdeckung (400), welche mit dem Gehäuse (200) gekoppelt ist, um das Abgaspfad-Element zu bedecken, wobei die Abdeckung einen zweiten Auslass (410) umfasst, durch welchen Gas, welches sich durch das Abgaspfad-Element bewegt, abgegeben wird,
wobei der in dem Gehäuse (200) gebildete erste Auslass (225) und der in der Abdeckung (400) gebildete zweite Auslass (410) in entgegengesetzten Richtungen gebildet sind,
wobei das Gas von dem ersten Auslass (225) zu dem zweiten Auslass (410) abgegeben wird, während es durch das Abgaspfad-Element (300) geführt wird,
**dadurch gekennzeichnet, dass** das Gehäuse (200) umfasst:
- eine untere Abdeckung (210), in welcher der Batteriezellen-Stapel (100) aufgenommen ist; und
- eine obere Abdeckung (220), welche mit der unteren Abdeckung (210) gekoppelt ist, welche es erlaubt, dass das Abgaspfad-Element (300) daran montiert wird, umfassend den ersten Auslass (225) und derart bereitgestellt, dass eine Länge einstellbar ist,
dadurch, dass die Abdeckung (400) mit der oberen Abdeckung (220) gekoppelt ist und das Abgaspfad-Element (300) zwischen der Abdeckung (400) und der oberen Abdeckung (220) platziert ist,
dadurch, dass die obere Abdeckung (220) umfasst:
- eine erste Platte (221), an welcher eine erste Schiene (222) gebildet ist, welche eine ungleichmäßige Form aufweist; und
- eine zweite Platte (223), an welcher eine zweite Schiene (224) gebildet ist, welche eine ungleichmäßige Form aufweist, um der ersten Schiene (222) der ersten Platte (221) zu entsprechen, wobei die zweite Platte (223) mit der ersten Platte (221) gekoppelt ist, und
dadurch, dass sich die erste Platte (221) und die zweite Platte (223) entlang der ersten Schiene (222) und der zweiten Schiene (224) bewegen, um eine Länge einzustellen.

2. Batteriemodul nach Anspruch 1, wobei eine Einsetznut (226), in welche das Abgaspfad-Element (300) eingesetzt ist, an einem Ende der unteren Abdeckung (220) gebildet ist.

3. Batteriemodul nach Anspruch 1, wobei ein beliebiges Abgaspfad-Element (300) und ein weiteres benachbartes Abgaspfad-Element (300) unter einer Mehrzahl von Abgaspfad-Elementen (300) in einer Zickzack-Form angeordnet sind.

4. Batteriemodul nach Anspruch 1, wobei das Abgaspfad-Element (300) umfasst:
eine innere Unterteilung (310), welche eine Kopplungsnut (311) umfasst;
wenigstens eine Höheneinstellung-Unterteilung (320), welche in die Kopplungsnut (311) der inneren Unterteilung (310) eingesetzt ist; und
eine äußere Unterteilung (330), welche die innere Unterteilung (310) bedeckt.

5. Batteriemodul nach Anspruch 4, wobei die Kopplungsnut (311) in wenigstens einem aus einem oberen Abschnitt und einem unteren Abschnitt der inneren Unterteilung (310) gebildet ist, und ein Vorsprung (321), welcher einer Form der Kopplungsnut (311) entspricht, an der Höheneinstellung-Unterteilung (320) gebildet ist,
wobei der Vorsprung (321) der Höheneinstellung-Unterteilung (320) in die Kopplungsnut (311) der inneren Unterteilung (310) eingesetzt ist.

6. Batteriemodul nach Anspruch 5, ferner umfassend einen Fixierungsstift (340), welcher dazu eingerichtet ist, die Höheneinstellung-Unterteilung (320) zu fixieren, wobei ein Durchgangsloch (312) in einer Seitenfläche der inneren Unterteilung (310) gebildet ist, und
eine Mehrzahl von Fixierungsnuten (322) in der Höheneinstellung-Unterteilung (320) gebildet sind,
wobei der Fixierungsstift (314) durch das Durchgangsloch (312) der inneren Unterteilung (310) hindurchtritt und in eine aus der Mehrzahl von Fixierungsnuten (322) der Höheneinstellung-Unterteilung eingesetzt ist, um die Höheneinstellung-Unterteilung (320) zu fixieren.

7. Batteriemodul nach Anspruch 4, wobei die äußere Unterteilung (330) mit der inneren Unterteilung (310) in einer gleitenden Weise gekoppelt ist.

8. Batteriemodul nach Anspruch 7, wobei eine Führungsnut (313) an einem Rand der inneren Unterteilung (310) gebildet ist und ein Vorsprung an einem Rand der äußeren Unterteilung (330) gebildet ist,
wobei sich der Vorsprung der äußeren Unterteilung (330) entlang der Führungsnut (313) der inneren Unterteilung (310) bewegt.

9. Batteriepack, umfassend das Batteriemodul (10) nach einem der Ansprüche 1 bis 8.

10. Fahrzeug, umfassend das Batteriemodul (10) nach einem der Ansprüche 1 bis 8.

## Revendications

1. Module de batterie (10) comprenant :
un empilement d'éléments de batterie (100) dans lequel une pluralité d'éléments de batterie sont empilés ;
un boîtier (200) dans lequel l'empilement d'éléments de batterie (100) est reçu, le boîtier comprenant une première sortie (225) à travers laquelle du gaz est évacué ;
un organe de chemin d'échappement (300) monté sur le boîtier pour fournir un chemin d'évacuation de gaz à travers lequel du gaz est évacué mais une flamme est empêchée de s'échapper ; et
un cache (400) couplé au boîtier (200) pour recouvrir l'organe de chemin d'échappement, le cache comprenant une seconde sortie (410) à travers laquelle du gaz se déplaçant à travers l'organe de chemin d'échappement est évacué,
dans lequel la première sortie (225) formée dans le boîtier (200) et la seconde sortie (410) formée dans le cache (400) sont formées dans des directions opposées,
dans lequel le gaz est évacué depuis la première sortie (225) vers la seconde sortie (410) tout en étant guidé par l'organe de chemin d'échappement (300),
**caractérisé en ce que** le boîtier (200) comprend :
- un cache inférieur (210) dans lequel l'empilement d'éléments de batterie (100) est reçu ; et
- un cache supérieur (220) couplé au cache inférieur (210), permettant de monter l'organe de chemin d'échappement (300) sur celui-ci, comprenant la première sortie (225), et disposé de sorte qu'une longueur est réglable,
**en ce que** le cache (400) est couplé au cache supérieur (220), et l'organe de chemin d'échappement (300) est positionné entre le cache (400) et le cache supérieur (220),
**en ce que** le cache supérieur (220) comprend :
- une première plaque (221) sur laquelle est formé un premier rail (222) ayant une forme irrégulière ; et
- une seconde plaque (223) sur laquelle un second rail (224) ayant une forme irrégulière est formé pour correspondre au premier rail (222) de la première plaque (221), la seconde plaque (223) étant couplée à la première plaque (221), et
**en ce que** la première plaque (221) et la seconde plaque (223) se déplacent le long du premier rail (222) et du second rail (224) pour régler une longueur.

2. Module de batterie selon la revendication 1, dans lequel une rainure d'insertion (226) dans laquelle l'organe de chemin d'échappement (300) est inséré est formée à une extrémité du cache supérieur (220).

3. Module de batterie selon la revendication 1, dans lequel un quelconque organe de chemin d'échappement (300) et un autre organe de chemin d'échappement (300) adjacent parmi une pluralité d'organes de chemin d'échappement (300) sont agencés selon une forme de zigzag.

4. Module de batterie selon la revendication 1, dans lequel l'organe de chemin d'échappement (300) comprend :
une cloison interne (310) comprenant une rainure de couplage (311) ;
au moins une cloison de réglage en hauteur (320) insérée dans la rainure de couplage (311) de la cloison interne (310) ; et
une cloison externe (330) recouvrant la cloison interne (310).

5. Module de batterie selon la revendication 4, dans lequel la rainure de couplage (311) est formée dans au moins une parmi une partie supérieure et une partie inférieure de la cloison interne (310), et une saillie (321) correspondant à une forme de la rainure de couplage (311) est formée sur la cloison de réglage en hauteur (320),
dans lequel la saillie (321) de la cloison de réglage en hauteur (320) est insérée dans la rainure de couplage (311) de la cloison interne (310).

6. Module de batterie selon la revendication 5, comprenant en outre une goupille de fixation (340) configurée pour fixer la cloison de réglage en hauteur (320),
dans lequel un trou traversant (312) est formé dans une surface latérale de la cloison interne (310), et
une pluralité de rainures de fixation (322) sont formées dans la cloison de réglage en hauteur (320),
dans lequel la goupille de fixation (314) passe à travers le trou traversant (312) de la cloison interne (310) et est insérée dans l'une de la pluralité de rainures de fixation (322) de la cloison de réglage en hauteur pour fixer la cloison de réglage en hauteur (320).

7. Module de batterie selon la revendication 4, dans lequel la cloison externe (330) est couplée à la cloison interne (310) d'une manière coulissante.

8. Module de batterie selon la revendication 7, dans lequel une rainure de guidage (313) est formée au niveau d'un bord de la cloison interne (310), et une saillie est formée au niveau d'un bord de la cloison externe (330),
dans lequel la saillie de la cloison externe (330) se déplace le long de la rainure de guidage (313) de la cloison interne (310).

9. Bloc-batterie comprenant le module de batterie (10) selon l'une quelconque des revendications 1 à 8.

10. Véhicule comprenant le module de batterie (10) selon l'une quelconque des revendications 1 à 8.
